# EUROPEAN PATENT SPECIFICATION

(11) **EP 2 158 799 B1**
(45) Date of publication and mention of the grant of the patent: **01.08.2012**
(21) Application number: 08163030.3
(22) Date of filing: 27.08.2008
(51) Int. Cl.: A01B 63/00, B60Q 1/08, B60Q 1/12, B60Q 1/14, B60Q 1/24, B60R 1/00

(54) **Self-propelled agricultural working machine**
Selbstangetriebene Landwirtschaftsarbeitsmaschine
Machine de travail agricole autopropulsée

(43) Date of publication of application: 03.03.2010
(73) Proprietor: CLAAS Tractor S.A.S., 78141 Vélizy-Villacoublay Cedex (FR)
(72) Inventor: Volk, Matthias, 33428 Harsewinkel (DE); Jeppe, Eckehard, 34289 Zierenberg (DE)
(74) Representative: Belda, Stefan Johannes

(56) References cited:
- EP-A- 1 498 310
- FR-A- 2 574 726
- US-A- 3 934 134
- US-A- 4 464 604
- US-A- 5 306 953
- US-A- 5 442 527
- US-B2- 6 871 970

## Description

The invention relates to a self-propelled agricultural working machine according to the preamble of Claim 1.

US 5,442,527 discloses a self-propelled agricultural working machine in the form of a tractor. The tractor has a plurality of headlights which are fitted to its body. These are switchable by means of a control unit in different groups, the headlights for the front and side lighting close to the vehicle forming a first group, the headlights for the rear lighting close to the vehicle forming a second group, the headlights for the rear lighting distant from the vehicle forming a third group, and the headlights for the front lighting distant from the vehicle forming a fourth group. Furthermore, a rotary switch is arranged in the tractor cab by means of which the headlights can be switched to the stages OFF, PARK, HEAD, WORK and HEAD and WORK. Within the stages HEAD, WORK and HEAD and WORK the control unit now makes it possible, by means of second switches, to select individual groups from the four mentioned which are to be switched on when the stage is selected. The above-mentioned selection is stored by means of the control unit so that when the rotary switch is turned to a certain stage, the previously selected groups can be switched on. Now as soon as a different selection of groups is made in the respective stage, this change is stored as a new selection. When the rotary switch is next turned to the respective stage, the newly selected group of headlights is then switched on. The disadvantage of such an agricultural working machine of prior art is that the driver of the working machine constantly has to change the individual lighting stages manually on the rotary switch, and, in addition, a new selection of groups of headlights must be assigned to the respective switching stages according to the work situation, which involves a considerable work effort on the part of the driver, and in which he constantly has to take his hand off the control lever, which impedes his working process. It must be regarded as a further disadvantage that only one very limited selection of switching stages is available for illuminating the driving and work area, and within these stages only a limited variation of different groups of headlights is available. Furthermore, it is disadvantageous for a plurality of headlights always to be combined in one group, which makes it impossible to select individual headlights selectively according to the work situation. The driver of the working machine therefore always selects a large number of groups to improve his own visibility. This results on the one hand in increased energy expenditure when operating the headlights, and secondly to the possibility of drivers of other vehicles being dazzled by the light of headlights which are not actually required, which impairs their driving safety.
Furthermore, it is known from the practice that the mirrors on agricultural working machines, e.g. tractors, combine harvesters or forage harvesters, can be adjusted by means of an electric drive, which is actuated by a control lever operated correspondingly by the driver. During the work operation, however, it is not possible for the driver of the working machine constantly to adjust the mirrors to the prevailing work situation because he has to perform the actions required to perform the work task, for example steering, changing gear, monitoring work units, monitoring transfer processes etc. The mirrors therefore generally remain in a certain position once selected. In summary, the prior art provides no satisfactory possibility that provides the driver of the self-propelled agricultural working machine with an improvement of his view of the driving and working area, as well as preventing an impairment in the visibility of the drivers of oncoming vehicles.

From US-Patent 4,454,604 there is known a tractor with flood work lamps. Switching of the lamps is controlled automatically depending on the ground speed of the tractor. At low speeds during work on the field, the driver needs an intensive illumination of the environment. Accordingly, the flood work lamps are being switched on. On the other hand, when highway speeds are attained by the tractor, the work lighting is no longer necessary and is thus being switched off. The described control of lighting is limited to vehicle speed as input parameter.

It is an object of the present invention to avoid disadvantages of cited prior art and, in particular, to develop a self-propelled agricultural working machine that improves the visibility for the driver of the working machine under a plurality of different operating conditions in a comfortable way.

This object is achieved according to the invention by the characterising features of Claim 1.

Because in a self-propelled agricultural working machine with at least one active and/or passive optical element the at least one active and/or passive optical element is automatically controllable and/or adjustable by means of at least one signal processing unit arranged on the working machine depending on current working conditions of the agricultural working machine, an adaptation of the at least one active and/or passive optical element of the agricultural working machine to the current operating condition, and hence also to the current driving and/or work situation of the working machine, always takes automatically and without any required driver intervention. This results in a considerable improvement in visibility for the driver since his view of the fields of vision important for the respective driving and/or work situation on and/or around the working machine is improved by means of the at least one active and/or passive optical element and his concentration on the important points is increased.

In order to provide the driver of the agricultural working machine with the possibility of assigning the optical elements required in his opinion to the individual driving and working conditions of the working machine, the at least one active and/or passive optical element can be assigned to the individual operating conditions of the working machine by means of at least one input unit and the assignment can be stored in the signal processing unit so that it can be recalled.

In an advantageous development of the invention the control and/or adjustment of the at least one active and/or passive optical element includes an adjustment, for example swivelling about a horizontal or vertical axis or displacement along a straight or bent path, and/or an activation, e.g. switching on an active optical element, and/or a deactivation, e.g. switching off an active optical element, and/or influencing the work parameter of the at least one active and/or passive optical element, for example dimming an active optical element.

In order to provide the driver of the agricultural working machine with the possibility of adapting the control and/or adjustment of the at least one active and/or passive optical element to the optimum degree, in his view, to the individual driving and working conditions of the working machine, the control and/or adjustment of the at least one active and/or passive optical element assigned to the respective operating conditions can be set by at least one input unit and the setting can be stored in the signal processing unit so that it can be recalled in an advantageous development of the invention.

So that the driver of the working machine is able to adapt the assignment and/or setting to the current driving and working conditions exactly to prevailing operating conditions, the assignment and/or setting takes place within the framework of a teach-in drive in an advantageous development of the invention. The signal processing unit can then be set automatically to the assignment and/or setting carried out during journeys subsequently undertaken.

The assignment and/or setting can advantageously be simulated by means of the signal processing unit so that the driver of the working machine is able to check the assignment of the at least one active and/or passive optical element to individual operating conditions and/or the setting of the control and/or adjustment of the at least one active and/or passive optical element assigned to the respective operating conditions without having to concentrate on other working tasks.

In an advantageous development of the invention the simulation can be graphically represented on a display unit, so that the driver is able, very comfortably and quickly, to determine the effects of the assignment and/or setting undertaken by him.

To allow optimum and fast, automatic control and/or adjustment of the at least one active and/or passive optical element, the signal processing unit, in an advantageous development of the invention, detects changing operating conditions of the agricultural working machine on the basis of at least one sensor signal, for example the cutter bar height of a combine harvester, on the basis of which the signal processing unit establishes whether the cutter bar is in the operating position or in the non-operating position. Additionally or alternatively, the signal processing unit detects changing operating conditions on the basis of at least one manual actuation of a control element, for example the switch for raising or lowering the cutter bar of a combine harvester, on the basis of which the signal processing unit establishes whether the cutter bar is in the operating position or in the non-operating position. Additionally or alternatively, the signal processing unit detects changing operating conditions on the basis of the lapse of a defined time, for example the lapse of a time determined in a so-called teach-in drive for lifting a plough attached to a tractor, escaping from the processing lane, turning of the tractor in the headland whilst simultaneously turning the plough, driving into a new processing lane and lowering the plough. In subsequent repetitive processing runs the signal processing unit then monitors the time determined in the teach-in drive and obtains from this information on changing operating conditions. Additionally or alternatively the signal processing unit detects changing operating conditions on the basis of the covering of a definable distance of a processing lane, e.g. a distance entered and/or determined during a teach-in drive, so that after the distance is covered the signal processing unit detects that the operating conditions change because the processing lane is changed, for example.

The operating conditions influencing the control and/or adjustment of the at least one active and/or passive optical element include, in an advantageous development, at least road travel, so that a mirror, for example, is automatically set during travel on public highways, so that the driver has an optimum view and is able to monitor the traffic situation alongside and behind his vehicle. Alternatively or additionally, the operating conditions include at least the field travel, so that a work light fitted to a tractor, for example, is automatically activated in field travel, i.e. off public highways, so that the driver has an optimum view and is able to monitor a working implement attached to the tractor when in the operating position. Alternatively or additionally, the operating conditions include at least the position of the working machine, so that the signal processing unit, for example, detects on the basis of GPS coordinate data received, in connection with a stored field survey, that a forage harvester is at the exit from a driving lane and the signal processing unit automatically activates further work lights arranged on the forage harvester, which headlights optimally illuminate the headland. Alternatively or additionally, the operating conditions include at least the passage through a processing area of the working machine, so that the curved course of a crop swath lying on a field, for example, is automatically illuminated by means of a swivel work light arranged on the forage harvester, so that the driver is able to follow the course continuously and easily. Alternatively or additionally, the operating conditions include at least the working operation of at least one working mechanism actively connected to the working vehicle, so that a work light, for example, is automatically activated when a grain tank drain pipe of a combine harvester is swung out, so that the slewing area and the transfer area are optimally eliminated and both the driver of the combine harvester and the driver of the filler vehicle have a good view of the area. Alternatively or additionally the operating conditions include the non-working operation of at least one working mechanism actively connected to the working vehicle, so that when a straw chopper arranged on a combine harvester is switched off, for example, rear side work lights can be automatically deactivated. Alternatively or additionally, the operating conditions include at least the circumnavigation of an obstruction in field travel, so that a work light is swivelled during the circumnavigation of the obstruction, for example, so that it illuminates the obstruction at all times to enable the drive to determine, to the optimum degree, when he has circumnavigated the obstruction and can return to his original driving lane. Alternatively or additionally, the operating conditions include at least turning at the end of the field, so that the mirrors on a tractor with an attached plough are automatically swivelled upwards when turning, for example, so that the driver is able to monitor the plough even during the rotation of the plough to the optimum degree by means of the mirrors. Alternatively or additionally, the operating conditions include at least the escape from the driving lane on the field, so that in the case of a combine harvester, for example, a plurality of front and side work lights are automatically activated as soon as the combine harvester escapes from the driving lane, so that the driver has an optimum view of the headland. Alternatively or additionally, the operating conditions include at least a transfer process from one working machine to a second working machine, for example a tractor with an attached trailer, or vice versa, so that work lights arranged on the working machines, for example, are automatically activated during the transfer process so that the drivers of the working machines are able to monitor the transfer process to the optimum degree. Alternatively or additionally, the operating conditions include at least the attachment of additional devices to the working machine, so that during the attachment or disconnection of a cutter bar on a combine harvester, for example, the work lights of the combine harvester can be automatically activated to illuminate the attachment area for the cutter bar. Alternatively or additionally the operating conditions include at least the movement of attachments on the working machine so that in the case of a tractor with an attached plough, for example, the mirrors of the tractor are swivelled downwards when the plough is lowered into the working position so that the driver has an optimum view of the working area of the plough in the field soil. Alternatively or additionally, the operating conditions include at least the actuation of a hydraulic control valve so that towing hose bars attached to an attached manure container, for example, is swivelled outwards by the actuation of a control valve fitted to a tractor, and the signal processing unit automatically adjusts the mirrors of the tractor so that the driver of the tractor is able to see the outer ends of the towing hose bars. Alternatively or additionally, the operating conditions include at least the actuation of an actuator, so that the signal processing unit, for example, detects the actuation of an adjusting drive for the crop feed elements of a chopped crop distributor on a combine harvester and swivels a rear swivel work light of the combine harvester automatically so that the distribution area of the chopped crop is illuminated on the field soil. Alternatively or additionally, the operating conditions include at least the direction of travel of the working machine, so that in the case of a tractor with attached plough, for example, the mirrors are automatically swivelled upwards as soon as the tractor is reversed, providing the driver with an optimum view of the rear area. Alternatively or additionally, the operating conditions include at least the ambient brightness or visibility so that the driving light on a combine harvester, for example, is activated as soon as the signal processing unit detects, by means of a coupled brightness or visibility sensor, that the brightness or visibility lie below a defined value. Alternatively or additionally, the operating conditions include at least the maintenance and/or filling of the working machine, so that in the case of a combine harvester, for example, the work lights are automatically activated when a maintenance mode is set, which work lights improve visibility on and in the combine harvester during maintenance and/or filling of the combine harvester, and the work lights which are not required for maintenance and/or filling are simultaneously and automatically deactivated.

To relieve the load from the driver of the working machine still further, the control and/or adjustment of the at least one active and/or passive optical element is/are integrated in an advantageous development of the invention in a field end management system so that the at least one active and/or passive optical element is automatically controlled and/or adjusted simultaneously with or dependently on other functional processes at the end of the field.

The at least one active optical element is advantageously a vehicle headlight or a vehicle light.

The at least one passive optical element is advantageously a vehicle mirror or a wide angle lens.

The invention is explained in greater detail below with reference to the attached drawings.
Fig. 1 shows a diagrammatic representation of agricultural working machines in a first working situation,
Fig. 2 shows a diagrammatic representation of an agricultural working machine in a second working situation,
Fig. 3 shows a diagrammatic representation of agricultural working machines in a third working situation,
Fig. 4 shows a diagrammatic representation of an agricultural working machine in a fourth working situation;
Fig. 5 shows a diagrammatic representation of an agricultural working machine in a fifth working situation, and
Fig. 6 shows an exemplary representation of a display unit arranged on an agricultural working machine.

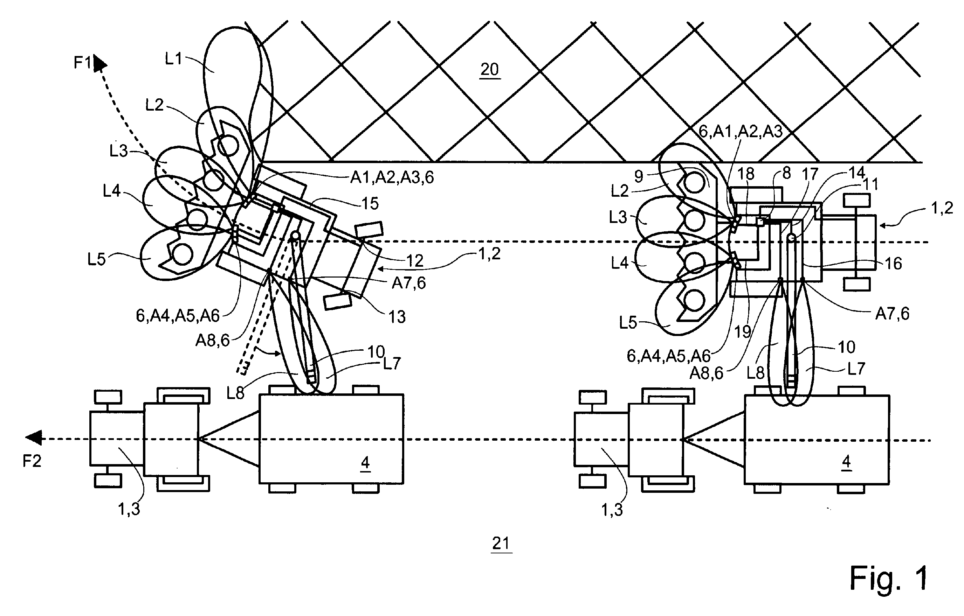

Figure 1 shows a first working situation of agricultural working machines 1 in a diagrammatic elevation. The working situation is the harvesting of maize on a field 21 by means of a forage harvester 2, which transfers the chopped maize by means of a spout 10 onto a trailer 4, which is towed by a tractor 3. In order to be able to explain the invention taking a plurality of examples, forage harvester 2, trailer 4 and tractor 3 are shown in two positions. In the right position forage harvester 2 is in harvesting operation is in a driving lane with direction of travel F1, and cuts the maize from crop stand 20 by means of an attached maize header 9. The cut maize is conveyed by means of maize header 9 to a central region and is then transferred to the work units of forage harvester 2. The work units consist of a chopper drum fitted with cutters which crush the maize, and a downstream so-called post-accelerator, which accelerates the cut crop so that it can be transferred by means of swivel spout 10 onto to trailer 4 travelling in parallel. A plurality of active optical elements 6 are arranged on the driver's cab of forage harvester 2, on the right and left, in the form of work lights A1, A2, A3, A4, A5, A6. These work lights A1, A2, A3, A4, A5, A6 are actuated by a signal processing unit 8 by means of suitable control cables 18, 19 according to the current operating conditions. In the case of the operating condition, harvesting, shown, it is important for the driver of forage harvester 2 to be able to see maize header 9 and the area immediately in front of maize header 9, and to monitor it. For this purpose signal processing unit 8 automatically actuates a plurality of work lights A2, A3, A4, A5, which are aligned to the required region. Work light A2 generates illuminated area L2, work light A3 generates illuminated area L3, work light A4 generates illuminated area L4 and work light A5 generates illuminated area L5, so that illuminated areas L2, L3, L4, L5 provide the illumination and improvement in visibility of the driver required for the operation condition harvesting. Since outer work lights A1 and A6 are not required for the current operating condition, signal processing unit 8 does not activate them either, so that no unnecessary energy is consumed. Now as soon as the operating condition changes, signal processing unit 8 adapts the control of work lights A1, A2, A3, A4, A5, A6 accordingly. It is shown by way of example in the left half of Fig. 1 that forage harvester 2 moves out of crop stand 20 and approaches the next driving lane in the so-called headland. Signal processing unit 8 determines that forage harvester 2 is moving out of crop stand 20 by means of a field survey stored in signal processing unit 8 in conjunction with a position determining unit, not shown here, for example a GPS receiver. Signal processing unit 8 then actuates work lights A2, A3, A4 and A5 so that they are swivelled upwards by means of a swivel drive in such a manner that their illuminated areas L2, L3, L3 and L4 are enlarged in front of maize header 9. This improves the visibility of the driver in the headland.
Signal processing unit 8 detects, from a sensor 13 arranged on steering axle 12, which sensor is connected by means of a signal cable 15 to signal processing unit 8, that the rear wheels of forage harvester 2 are locked in order to change direction of travel F1. Signal processing unit 8 then automatically actuates work light A1, which illuminates a lateral front illuminated area L1 so that the visibility of the driver in the headland is improved even further.

Figure 1 shows a further example of the actuation of active optical elements 6 dependent on operating conditions. In the right representation of forage harvester 2 spout 10 projects almost at right angles to direction of travel F1 from forage harvester 2 in order to transfer the crop to the parallel running trailer 4. A sensor 11 arranged on spout 10 detects the position of spout 10 and transmits this by means of a signal cable 14 to signal processing unit 8. This actuates two work lights A7, A8 arranged on a lateral region of forage harvester 2 by means of two control cables 16, 17, and activates these during the operating condition "Transfer". Illuminated areas L7, L8 of work lights A7, A8 illuminate spout 10, so that both the driver of forage harvester 2 and the driver of tractor 3 towing trailer 4 are able to monitor spout 10 and hence the transfer process to the optimum degree.
Now if forage harvester 2, as shown in the left half of Figure 1, moves out of the driving lane and changes its direction of travel F1, spout 10 is swivelled by means of an automatic swivel unit in such a manner that trailer 4 is reached by the crop during the transfer even in a direction of travel F1 not parallel to direction of travel F2. This swivel movement is detected by sensor 11, which transmits a corresponding signal to signal processing unit 8. Signal processing unit 8 detects the changing operating condition and now actuates work lights A7, A8 via control cables 16, 17 so that work lights A7, A8 are swivelled by means of a swivel unit, not shown, in such a manner that illuminated areas L7, L8 of work lights A7, A8 also continue to illuminate spout 10, so that the drivers of working machines 1 are also able to continue monitoring it to the optimum degree.

The statements made similarly apply to a combine harvester, not shown, in which work lights arranged correspondingly on the combine harvester are also automatically activated by a signal processing unit, for example in the operating condition "Swivel out grain tank unloading tube", in order to illuminate the swivel and working area of the grain tank unloading tube. It is also conceivable, in the case of a combine harvester, for the signal processing unit to detect the width of the cutter bar automatically, as a function of the cutter bar attached, and to actuate swivel work lights on the combine harvester so that their illuminated area illuminates the outer edges of the cutter bar. As a further example it is conceivable for a fruit-dependent adjustment of the work lights and/or mirrors to be carried out by means of the signal processing unit. For example, the driver of the working machine sets a particular fruit currently to be harvested, for example maize or wheat, at a control terminal, so that the working units of the working machine are set directly by means of suitable actuators. This fruit-dependent operating condition is also simultaneously detected by the signal processing unit and adjust the work lights and/or mirrors correspondingly. It is also conceivable, for example on a combine harvester, but also on other agricultural working machines, for the attached work lights to be adjusted automatically according to the crop parameters, e.g. the crop height, so that the illuminated area of the work lights are set higher when harvesting maize than when harvesting corn. The examples mentioned represent a multiplicity of working situations and operating conditions on a combine harvester in which the signal processing unit automatically controls and/or adjusts the active and/or passive optical elements installed on the combine harvester.

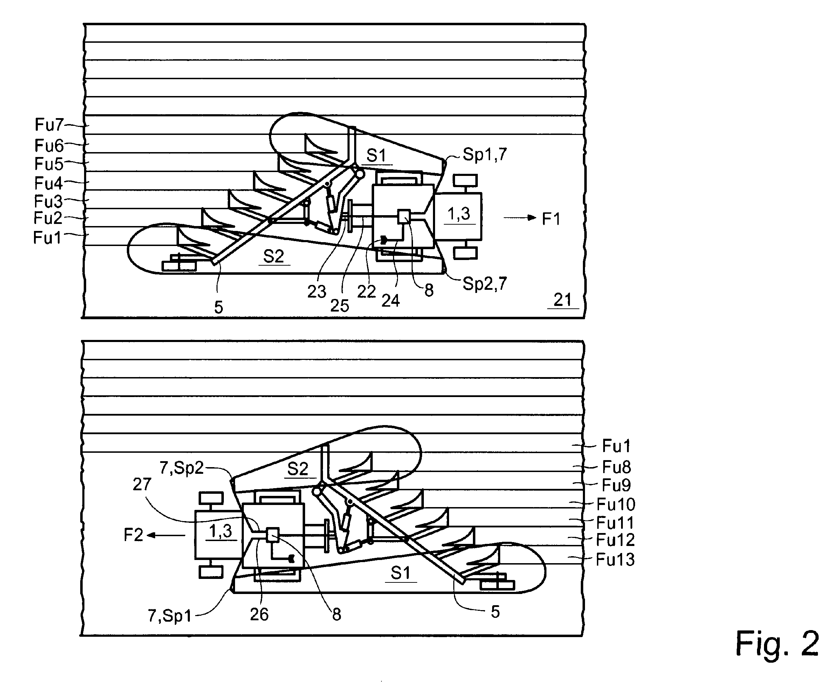

Figure 2 shows a second working situation of an agricultural working machine 1 in a diagrammatic elevation. The working situation involves the ploughing of a field 21 by means of a tractor 3 with an attached 6-share turning plough 5. In the upper representation of Figure 2 tractor 3 travels in the first direction of travel F1 along a furrow Fu7 already ploughed and produces six further furrows Fu1, Fu2, Fu3, Fu4, Fu5, Fu6 by means of the plough shares immersed into the surface of field 21. A position sensor 23 arranged on plough 5 is connected by means of a signal cable 25 to a signal processing unit 8 arranged on tractor 3. This unit then determines, from the height setting of plough 5 transmitted from sensor 23, whether plough 5 is in an operating position or non-operating position. Signal processing unit 8 also receives current position data of the tractor by means of a signal cable 24 coupled to a GPS receiver 22. Direction of travel F1 of tractor 3 and the associated setting of plough 5 are determined in conjunction with a field map stored in signal processing unit 8. If plough 5 is now in an operating position, signal processing unit 8 actuates the passive optical elements 7 in the form of mirrors Sp1, Sp2, via control cables 26, 27, so that each of the outer working areas of the plough are visible to the driver of tractor 3 through mirrors Sp1, Sp2 according to direction of travel F1. For this purpose mirror Sp1 is swivelled downwards automatically by means of an adjusting device in such a manner that its visible region S1 includes the outer left region of plough 5 viewed in direction of travel F1. Mirror Sp2, on the other hand, is swivelled upwards automatically due to actuation by signal processing unit 8 in such a manner that its visible region S2 includes the outer right region of plough 5 viewed in the direction of travel.

As soon a tractor 3 then enters the headland, plough 5 is automatically raised by means of a headland management system, is also turned during turning of tractor 3, and is lowered automatically when the tractor enters the new driving lane. During this process signal processing unit 8 automatically controls mirrors Sp1, Sp2 so that the outer dimensions of plough 5 are visible to the driver through mirrors Sp1, Sp2 at all times. For this purpose mirrors Sp1, Sp2 can be swivelled both about a horizontal and about a vertical axis. The coordination of the individual work steps, and hence of the individual operating conditions of the headland management system and control steps of signal processing unit 8, takes place in such a manner, for example, that a defined setting of both mirrors Sp1, Sp2 can be assigned to each individual operating condition within the headland management system. When the plough is raised mirrors Sp1, Sp2 can therefore be raised simultaneously in order to be able to monitor plough 5 through mirrors Sp1, Sp2, even in the raised position. When plough 5 turns, mirrors Sp1, Sp2 are swivelled inwards so that the movement of plough 5 can be monitored through the mirrors. As soon as plough 5 has completed the turning movement, mirrors Sp1, Sp2 are automatically swivelled outwards again so that the raised position of plough 5 can be monitored through mirrors Sp1, Sp2. Finally, mirrors Sp1, Sp2 are swivelled automatically downwards when plough 5 is lowered into the working position, so that the outer regions of plough 5 can again be monitored through mirrors Sp1, Sp2. The setting or actuation of mirrors Sp1, Sp2 can be assigned to the individual operating conditions, for example, as part of a teach-in drive in which mirrors Sp1, Sp2 are set once manually in each operating condition and signal processing unit 8 stores the setting carried out in conjunction with the respective operating condition. Now as soon as the respective operating condition recurs during operation of the agricultural working machine 1, signal processing unit 8 actuates mirrors Sp1, Sp2 so that they automatically assume the stored setting.

In the lower representation of Figure 2 tractor 3 now travels, after the turning process is completed, in the second direction of travel F2 along the previously ploughed furrow Fu1, and again produces six further furrows Fu8, Fu9, Fu10, Fu11, Fu12, Fu13. In order to be able to see the outer region through mirrors Sp1, Sp2, even in this setting of plough 5, which is the mirror image of the setting according to the upper representation of Figure 2, signal processing unit 8 controls mirror Sp1 upwards, as a function of the signals received from sensors 22 and 23, so that its visible region S1 is enlarged relative to the previous setting and it renders the outer left region of plough 5 visible viewed in direction of travel F2. Mirror Sp2 is actuated correspondingly by signal processing unit 8 so that it is swivelled downwards and its visible region S2 is reduced relative to the previous setting. The outer right region of plough 5, viewed in direction of travel F2, is therefore again visible through mirror Sp2.

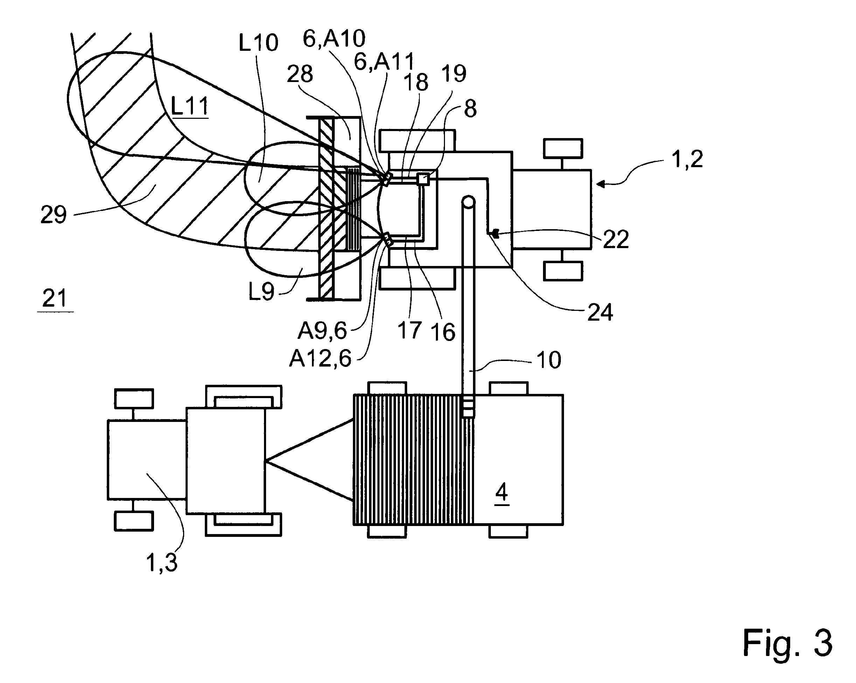

Figure 3 shows a third working situation of agricultural working machines 1 in a diagrammatic elevation. The working situation involves the receiving of a swath 29 deposited on a field 21, which swath 29 consists of cut grass, for example. Swath 29 is received by a pick-up 28 attached to a forage harvester 2, accelerated by means of the working mechanisms arranged in forage harvester 2, and transferred by a spout 10 onto a trailer 4, which is towed by a tractor 3. A plurality of active optical elements 6, in the form of work lights A9, A10, A11, A12, are arranged on the front edge of the cab of forage harvester 2, each of which work lights have different illuminated areas L9, L10, L11. The individual work lights A9, A10, A11, A12 are connected by control cables 16, 17, 18, 19 to a signal processing unit 8. Signal processing unit 8 is also connected by means of a signal cable 24 to a GPS receiver 22 so that it detects the current position of forage harvester 2 at all times. The course of swath 29 on field 21 is stored in signal processing unit 8, this course being determined during cutting and tying of the grass. In order to provide the driver of forage harvester 2 with the best possible view of the region immediately in front of pick-up 28, signal processing unit 8 actuates the two work lights A9 and A10 so that they are activated and their illuminated areas L9 and L10 illuminate the desired area. Since in the example shown the operating condition is now such that the course of the swath 29 describes an arch, signal processing unit 8 also automatically actuates work light A11 so that its illuminated area L11 renders the course of swath 29 easily detectable to the driver of forage harvester 2.

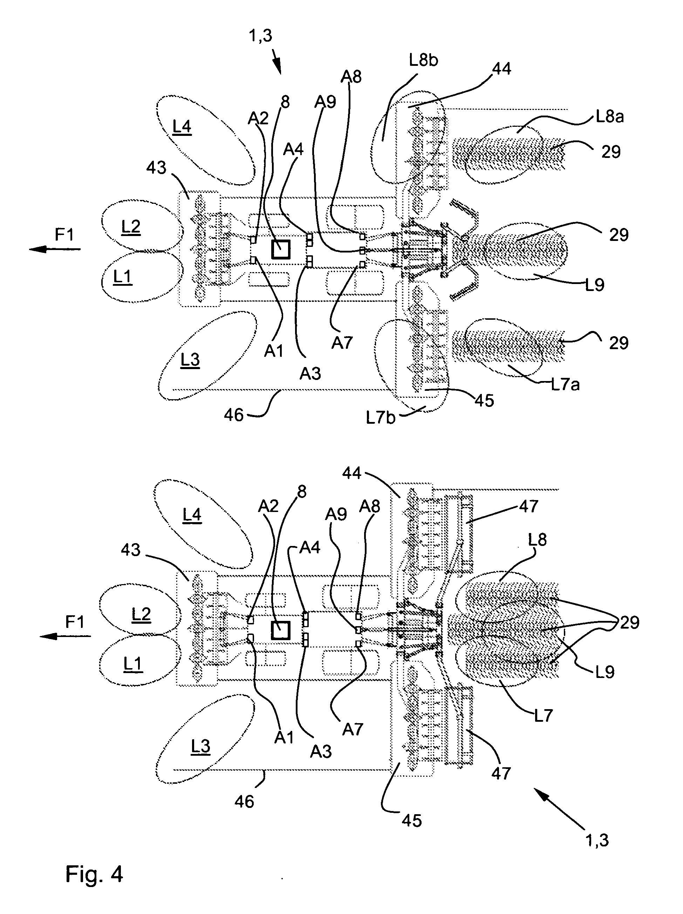

Figure 4 shows a fourth working situation of an agricultural working machine 1 in a diagrammatic elevation in two different working positions. Agricultural working machine 1 is a tractor 3 with an attached combination of cutting mechanisms, which tractor travels in direction of travel F1. This combination consists essentially of an attached front cutting mechanism 43 with integrated processor and a double lateral cutting mechanism consisting of two lateral cutting mechanisms 44 and 45, also with integrated processors. Both front cutting mechanism 43 and lateral cutting mechanisms 44, 45 are represented as disc mowers with cutter bars and the mowing discs that are driven so that they rotate about vertical axes and are fitted with cutting blades.

In the upper representation of Figure 4 the combination of cutting mechanisms is set so that each of the three cutting mechanisms 43, 44, 45 deposits an individual swath 29 spaced a certain distance apart. Such a setting is selected, for example, when the cut grass is to be processed into hay, and for this purpose remains on the field for further distribution by means of a turner in order to dry it, then press it into cuboid or round bales by means of a press. Two work lights A1 and A2 are arranged on a front region of tractor 3. A further four work lights A3, A4 are arranged on an upper, front region of the cab of tractor 3. Three work lights A7, A8, A9 are additionally attached to an upper, rear region of the cab of tractor 3. Work lights A1, A2, A3, A4, A7, A8, A9 are actively connected, by means of control cables not shown here, to a signal processing unit 8 arranged on tractor 3, which unit adapts the control of work lights A1, A2, A3, A4, A7, A8, A9 according to the current operating conditions. During the harvesting run on the field, signal processing unit 8 automatically actuates work lights A1 and A2 in such a manner that illuminated areas L1 and L2 produced by them illuminate the area in front of front cutting mechanism 43 so that the driver of tractor 3 is able to monitor this area to the optimum degree. Furthermore, signal processing unit 8 automatically actuates work light A3 in such a manner that illuminated area L3 produced by it is aligned so that the driver of tractor 3 is able to monitor both the area to be covered by cutting mechanism 45 for foreign bodies and/or obstructions, and is able to detect the stand edge 46 between grass already mowed and grass yet to be harvested in order to control tractor 3 accordingly. Work light A4 is automatically actuated by signal processing unit in such a manner that illuminated area L4 produced by it is aligned so that the driver of is able to monitor the area to be covered by cutting mechanism 44 for foreign bodies and/or obstructions. Work light A7 is controlled by signal processing unit 8 during the harvesting run in such a manner that illuminated area L7a produced by it is aligned so that the driver of tractor 3 is able to see and monitor swath 29 produced by lateral cutting mechanism 45 as a work inspection. A similar actuation takes place during the harvesting run for work light A8, whose illuminated area L8a illuminates swath 29 produced by lateral cutting mechanism 44. Finally, work light A9 is controlled by signal processing unit 8 in such a manner that illuminated area L9 produced by it is aligned so that the driver of tractor 3 is able to see and monitor swath 29 produced by front cutting mechanism 43 as a work inspection.
Now when tractor 3 enters the headland and the driver turns tractor 3, a headland management system automatically raises cutting mechanisms 43, 44 and 45 slightly. As a function of this raising of cutting mechanisms 43, 44, 45 and the resultant change in operating condition, signal processing unit 8 now actuates work light A7 in such a manner that the illuminated area L7b produced by it illuminates the outer edge of lateral cutting mechanism 45 to enable the driver to detect any obstructions present in the turning area of lateral cutting mechanism 45 and influence the turning manoeuvre in such a manner that a collision of lateral cutting mechanism 45 with the obstruction is prevented. Similarly, signal processing unit 8 actuates work light A8 so that illuminated area L8b produced by it illuminates the outer edge of lateral cutting mechanism 44. After the turning manoeuvre is completed the headland management system lowers cutting mechanisms 43, 44 and 45 back into the operating position and commences a new harvesting run. This operating condition, which changes again, is in turn detected by signal processing unit 8, which then again actuates work lights A7 and A8 so that illuminated area A7a and A8a produced by them again illuminate the respective swaths 29.

In the lower representation of Figure 4 the combinations of cutting mechanisms is now adjusted so that a further transverse conveying device 47 is arranged downstream from the two lateral cutting mechanisms 44 and 45. The processors in lateral cutting mechanisms 44, 45 perform the function of overhead conveyors with which the cut grass is transferred to transverse conveying devices 47. An individual wide swath 29 is then produced from individual swaths 29 by means of transverse conveying devices 47. Such a setting is selected, for example, when the cut grass, as shown in Figure 3, is to be picked up and processed by means of a forage harvester for storage in a silo. The control of work lights A1, A2, A3 and A4 by means of signal processing unit 8 corresponds to the described control in the upper representation of Figure 4, so that this is not discussed again here. Work lights A7, A8 and A9 are actuated during the harvesting run by signal processing unit 8 so that illuminated areas L7, L8 and L9 produced by them together illuminate wide swath 29 so that the driver of tractor 3 is able to see and monitor swath 29 produced by cutting mechanisms 43, 44, 45 as a work inspection.
The actuation of work lights A7 and A8 described in the upper representation of Figure 4, together with a headland management system, can similarly be transferred to the setting of the combination of cutting mechanisms according to the lower representation in Figure 4, which is why this is not discussed again here.

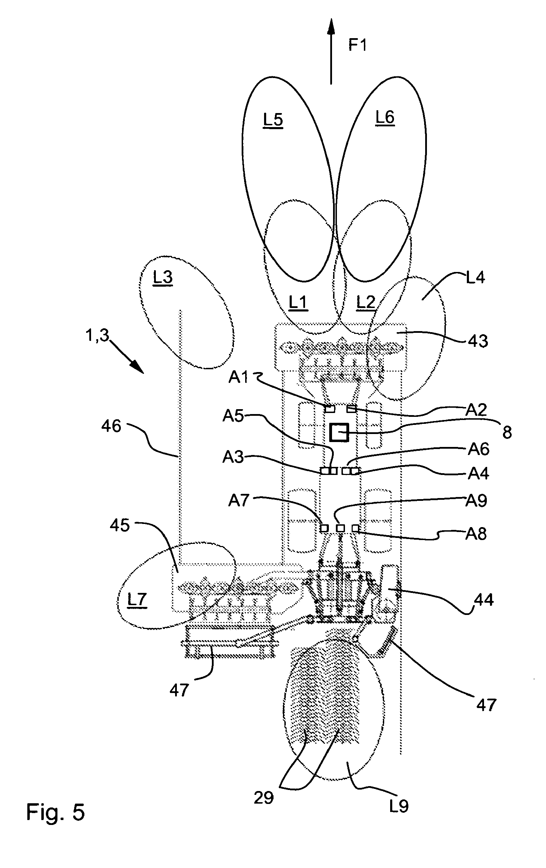

Figure 5 shows a fifth working situation of an agricultural working machine 1 in a diagrammatic elevation. Agricultural working machine 1 is a tractor 3 with an attached combination of cutting mechanisms, the tractor travelling in direction of travel F1. The construction corresponds essentially to the structure shown and described in the lower representation of Figure 4, but in contrast to this lateral cutting mechanism 44 and the associated transverse conveying device 47 are folded up into a transport position. Therefore only front cutting mechanism 43 and left lateral cutting mechanism 45, with downstream transverse conveying device 47, are in harvesting operation and produce a common wide swath 29. Such a setting of the combination of cutting mechanisms can be achieved, for example, when only residual surfaces on a field have to be harvested, or when only a narrow strip of grass is to be harvested.

Two work lights A1 and A2 are arranged on a front region of tractor 3. A further four work lights A3, A4, A5 and A6 are arranged on an upper front region of the cab of tractor 3. Three work lights A7, A8 and A9 are additionally attached to an upper rear region of the cab of tractor 3. Work lights A1, A2, A3, A4, A5, A6, A7, A8, A9 are actively connected, by means of control cables not shown here, to a signal processing unit 8 arranged on tractor 3, which unit adapts the control of work lights A1, A2, A3, A4, A5, A6, A7, A8, A9 according to the current operating conditions.

During the harvesting run on the field, signal processing unit 8 automatically actuates work lights A1 and A2 in such a manner that illuminated areas L1 and L2 produced by them illuminate the area in front of front cutting mechanism 43 so that the driver of tractor 3 is able to monitor this area to the optimum degree. Furthermore, signal processing unit 8 automatically actuates work light A3 in such a manner that illuminated area L3 produced by it is aligned so that the driver of tractor 3 is able to monitor both the area to be covered by cutting mechanism 45 for foreign bodies and/or obstructions, and is able to detect the stand edge 46 between grass already mowed and grass yet to be harvested in order to control tractor 3 accordingly. Work light A9 is controlled during the harvesting run by signal processing unit 8 in such a manner that illuminated area L9 produced by it is aligned so that the driver of tractor 3 is able to see and monitor swath 29 produced by front cutting mechanism 43 and lateral cutting mechanism 45 as a work inspection. Work lights A5, A6, A7 and A8 are deactivated during the harvesting run by signal processing unit 8 because they are not required.
Now when tractor 3 enters the headland and the driver turns tractor 3, a headland management system automatically raises cutting mechanisms 43 and 45 slightly. As a function of this raising of cutting mechanisms 43, 45 and the resultant change in operating condition, signal processing unit 8 now actuates work light A7 so that it is activated and the illuminated area L7 produced by it illuminates the outer edge of lateral cutting mechanism 45 to enable the driver to detect any obstructions present in the turning area of lateral cutting mechanism 45 and influence the turning manoeuvre in such a manner that a collision of lateral cutting mechanism 45 with the obstruction is prevented. Furthermore, signal processing unit 8 actuates work light A4 so that it is activated and illuminated area L4 produced by it illuminates the outer edge of front cutting mechanism 43. Since the raised front cutting mechanism 43 at least partially shades illuminated areas L1 and L2 of work lights A1 and A2, these are deactivated by signal processing unit 8 and work lights A5 and A6 are simultaneously activated, the illuminated areas L5 and L6 of which work lights then illuminate the area in front of front cutting mechanism 43 so that the driver of tractor 3 is able to monitor this area to the optimum degree during the turning manoeuvre. After the turning manoeuvre is completed the headland management system lowers cutting mechanisms 43 and 45 back into the operating position and commences a new harvesting run. This operating condition, which changes again, is in turn detected by signal processing unit 8, which then again actuates work lights A1 and A2 and again deactivates work lights A4, A5, A6 and A7.

The above-mentioned examples represent a multiplicity of working situations and operating conditions in which the signal processing unit controls and/or adjusts active and/or passive optical elements to improve visibility on a working machine. The examples can also be transferred, after suitable adaptation, to combine harvesters or other self-propelled agricultural working machines without departing from the essence of the invention.

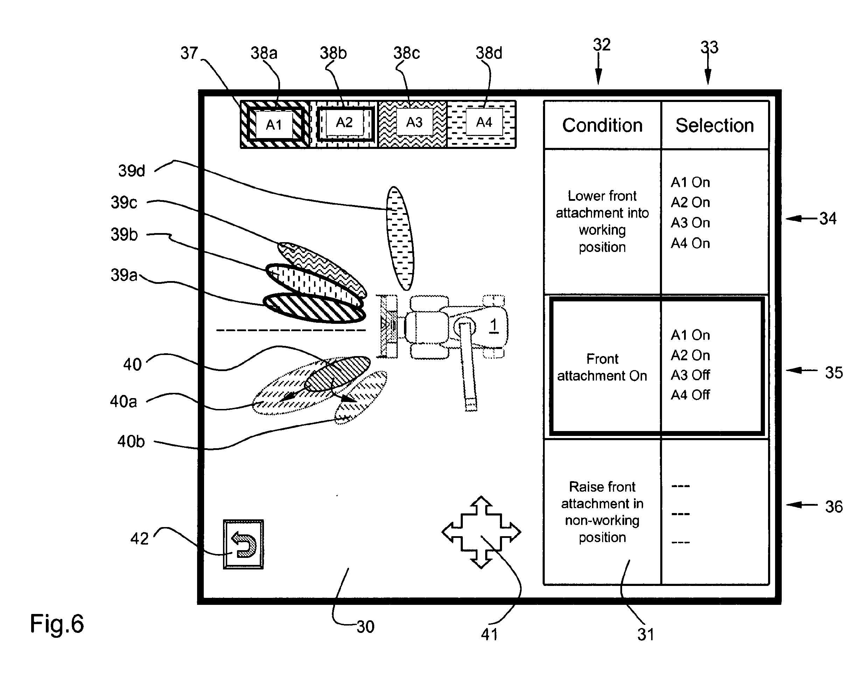

Figure 6 shows, by way of an example, a display unit 30, which is arranged on an agricultural working machine 1 and which may be designed, for example, as a touch screen display. A menu structure provides the driver with the possibility of linking the control of the work lights of his working machine 1, not shown here, to individual operating conditions of working machine 1, so that a specific selection of work lights can be assigned to the individual operating conditions. The assignment is then stored in the signal processing unit which then actuates the work lights automatically under the respective operating conditions according to the stored assignment.
For the menu-driven assignment display unit 30 has a display area 31 which in one column 32 indicates the operating conditions of the respective working situation and in a second column 33 indicates the respective selection of the work lights for the individual operating conditions. For a better understanding for the driver the operating condition preceding the current operating condition and the assignment of the work lights undertaken are also displayed on a first line 34 of display area 31. In the example shown for the working situation of picking up a swath on a field, according to the description of Figure 3, the preceding operating condition is the lowering of the front attachment into a working position. The fact that work lights A1, A2, A3 and A4 are to be switched on is assigned to this operating condition.
The current operating condition is displayed on a second line 35 of display area 31 and the driver can assign a certain control of the work lights to this operating condition. For visual support line 35 is highlighted so that the driver intuitively detects that he is able to make changes to this assignment. In the example shown the operating condition is the switching on of the front attachment. The driver has assigned the fact that work lights A1 and A2 are to be switched on and work lights A3 and A4 are not to be activated to this operating condition. In order to be able to make this selection display unit 30 has a selection area 37 in which selection fields 38 are assigned to the individual work lights A1, A2, A3, A4. By touching selection fields 38a and 38b the signal processing unit learns that work lights A1 and A2 are to be activated. To confirm the selection fields 38a and 38b are visually highlighted and the selection is also indicated textually in column 33 of line 35. So that the driver is able to carry out the assignment even more easily his working machine 1 is represented graphically in display unit 30 in an elevation. Illuminated areas 39 of work lights A1, A2, A3, A4 are also represented graphically, illuminated area 39a belonging to work light A1, illuminated area 39b belonging to work light A2, illuminated area 39c belonging to work light A3 and illuminated area 39d belonging to work light A4. Illuminated areas 39a and 39b are also visually highlighted by the described contact of selection fields 38a and 38b, so that the driver intuitively detects what the total illumination of his selection will be.
On a third line 36 of display area 31 the next operating condition is displayed to inform the driver the extent to which the assignment made to the current operating condition could also influence the next operating condition. In the example shown the next operating condition is the raising of the front attachment into a non-operating position, where no control of the work lights is yet assigned to this operating condition.
After work light controls have been assigned to individual operating conditions, the driver is able to simulate the complete process of a working situation by means of signal processing unit 8 and to have the respective assignment displayed graphically in display unit 30.
With the assignment, however, it is not only possible to switch static lighting elements on and off, according to the equipment of working machine 1, but it is also conceivable to adapt the mode of operation of dynamic lighting modules. For example, it is conceivable for a work light to be designed so that it can be swivelled and focussed. An example of the possibilities of assigning and controlling such a work light, not shown here, illuminated area 40 of the work light is represented in Figure 6. For example, the focussing of the work light is adaptable by touching a control field 41, so that a larger illuminated area 40a is formed. Alternatively or additionally, it is possible to swivel the work light so that illuminated area 40b assumes a different position relative to working machine 1.
Instead of making the selection and/or adjustment of illuminated areas 39, 40 by means of selection fields 38 or control fields 41, it is also conceivable for the illuminated areas 39, 40 to be selected and/or adjusted by directly touching the display.
By means of a menu field 42, the driver then leave the displayed menu area after the assignment is made and use display unit 30 for indicating information relevant to the working situation.
The procedure for controlling work lights A1, A2, A3, A4 described above is similarly also transferrable to the control of passive optical elements such as mirrors.

The coordination described between operating conditions in an implement management system and the control steps within signal processing unit 8 must considered to be by way of example only and represents a multiplicity of possible dependencies between an implement control and a control of active and/or passive optical elements 6,7.

### List of reference characters:

- 1: Working machine
- 2: Forage harvester
- 3: Tractor
- 4: Trailer
- 5: Plough
- 6: Active optical element
- 7: Passive optical element
- 8: Signal processing unit
- 9: Maize header
- 10: Spout
- 11: Sensor
- 12: Steering axle
- 13: Sensor
- 14: Signal cable
- 15: Signal cable
- 16: Control cable
- 17: Control cable
- 18: Control cable
- 19: Control cable
- 20: Crop stand
- 21: Field
- 22: GPS receiver
- 23: Sensor
- 24: Signal cable
- 25: Signal cable
- 26: Control cable
- 27: Control cable
- 28: Pick-Up
- 29: Swath
- 30: Display unit
- 31: Display area
- 32: Column
- 33: Column
- 34: Line
- 35: Line
- 36: Line
- 37: Selection area
- 38: Selection field
- 39: Illuminated area
- 40: Illuminated area
- 41: Control field
- 42: Menu field
- 43: Front cutting mechanism
- 44: Lateral cutting mechanism
- 45: Lateral cutting mechanism
- 46: Stand edge
- 47: Transverseconveying device
- A1: Work light
- A2: Work light
- A3: Work light
- A4: Work light
- A5: Work light
- A6: Work light
- A7: Work light
- A8: Work light
- A9: Work light
- A10: Work light
- A11: Work light
- A12: Work light
- F1: Direction of travel
- F2: Direction of travel
- Fu1-Fux: Furrow
- L1: Illuminated area
- L2: Illuminated area
- L3: Illuminated area
- L4: Illuminated area
- L5: Illuminated area
- L6: Illuminated area
- L7: Illuminated area
- L8: Illuminated area
- L9: Illuminated area
- L10: Illuminated area
- L11: Illuminated area
- S1: Visible area
- S2: Visible area
- Sp1: Mirror
- Sp2: Mirror

## Claims

1. A self-propelled agricultural working machine (1) with at least one active and/or passive optical element (6, 7), wherein
the at least one active and/or passive optical element (6, 7) is automatically controllable and/or adjustable by means of at least one signal processing unit (8) arranged on the working machine (1) depending on current working conditions of the agricultural working machine (1), (see below) **characterised in that** the at least are active and/or passive optical element (6,7) are assignable to individual operating condition of the working machine (1) by means of at least are input unit and **in that** the assignement as storable in the signal processing unit (8) so that it can be recalled.

2. The self propelled agricultural working machine (1) according to Claim 1, **characterised In that**
the control and/or adjustment of the at least one active and/or passive optical element (6, 7) Includes an adjustment and/or an activation and/or a deactivation and/or Influencing of the working parameters of the at least one active and/or passive optical element (6, 7).

3. The self-propelled agricultural working machine (1) according to claim 1 or 2
, **characterised in that**
the control and/or adjustment of the at least one active and/or passive optical element (6, 7) assigned to the respective operating conditions is adjustable by means of at least one input unit and **in that** the setting can be stored In the signal processing unit (8) so that It can be recalled.

4. The self-propelled agricultural working machine (1) according to any one of Claims 1 to 3, **characterised In that**
the assignment or adjustment takes place as part of a teach-in drive.

5. The self-propelled agricultural working machine (1) according to any one of Claims 1 to 4, **characterised in that**
the assignment and/or adjustment can be simulated by means of the signal processing unit (8).

6. The self-propelled agricultural working machine (1) according to Claim 5.
**characterised in that**
the simulation can be represented graphically on a display unit (30).

7. The self-propelled agricultural working machine (1) according to anyone of the preceding claims, **characterised in that**
the signal processing unit (8) detects changing operating conditions of the agricultural working machine (1) on the basis of at least one sensor signal and/or at least one actuation of a control element and/or the lapse of a definable time and/or the completion of a definable distance.

8. The self-propelled agricultural working machine (1) according to anyone of the preceding claims, **characterised in that**
the operating conditions include at least
- road travel and/or
- field travel and/or
- the position of the working machine (1) and/or
- the course of one processing area of the working machine (1) and/or
- the working operation of at least one working mechanism actively connected to the working machine (1) and/or
- the non-working operation of at least one working mechanism actively connected to the working machine (1) and/or
- the negotiation of an obstruction during field travel or
- turning at the end of the field and/or
- escaping from a driving lane on the field (21) and/or
- entry Into a driving lane on the field (21) and/or
- a process for transferring the crop from the working machine (1) onto a second working machine and/or
- a process for transferring crop from a second working machine onto the working machine (1) and/or
- the installation of attachments on the working machine (1) and/or
- the movement of attachments on the working machine (1) and/or
- the actuation of a hydraulic control valve and/or
- the actuation of an actuator and/or
- the direction of travel of the working machine (1) and/or
- the ambient brightness or visibility and/or
- the maintenance and/or filling of the working machine (1) with fuel.

9. The self-propelled agricultural working machine (1) according to any one of the preceding claims, **characterised in that**
the control and/or adjustment of the at least one active and/or passive optical element (6, 7) is integrated In a headland management system.

10. The self-propelled agricultural working machine (1) according to any one of the preceding claims, **characterised in that**
the at least one active optical element (6) is a vehicle headlight (A1,A2,A3,A4,A5,A6, A7,A8,A9,A10,A11,A12) or a vehicle light.

11. The self-propelled agricultural working machine (1) according to any one of the preceding claims, **characterised in that**
the at least one passive optical element (7) is a vehicle-mirror(Sp1,Sp2) or a wide angle lens.

## Patentansprüche

1. Selbstfahrende landwirtschaftliche Arbeitsmaschine (1) mit wenigstens einem aktiven und/oder passiven optischen Element (6, 7), wobei
das wenigstens eine aktive und/oder passive optische Element (6, 7) mittels wenigstens einer Signal verarbeitenden Einheit (8), welche auf der Arbeitsmaschine (1) angeordnet ist, in Abhängigkeit von den Arbeitsbedingungen der landwirtschaftlichen Arbeitsmaschine (1) automatisch steuerbar und/oder einstellbar ist,
**dadurch gekennzeichnet, dass** das das wenigstens eine aktive und/oder passive optische Element (6, 7) zu einzelnen Betriebsbedingungen der Arbeitsmaschine (1) mittels der wenigstens einen Eingabeeinheit zuordenbar ist und dass die Zuordnung in der Signal verarbeitenden Einheit (8) speicherbar ist, so dass sie erneut abgerufen werden kann.

2. Selbstfahrende landwirtschaftliche Arbeitsmaschine (1) nach Anspruch 1, **dadurch gekennzeichnet, dass** die Steuerung und/oder Einstellung des wenigstens einen aktiven und/oder passiven optischen Elements (6, 7) eine Einstellung und/oder eine Inbetriebnahme und/oder eine Außerbetriebstellung und/oder Beeinflussung der Arbeitsparameter des wenigstens einen aktiven und/oder passiven optischen Elements (6, 7) umfasst.

3. Selbstfahrende landwirtschaftliche Arbeitsmaschine (1) nach Anspruch 1 oder 2, **dadurch gekennzeichnet, dass**
die Steuerung und/oder Einstellung des wenigstens einen aktiven und/oder passiven optischen Elements (6, 7), welche den jeweiligen Betriebsbedingungen zugeordnet sind, mittels der wenigstens einen Eingabeeinheit einstellbar ist und dass die Einstellung in der Signal verarbeitenden Einheit (8) gespeichert werden kann, so dass sie erneut abgerufen werden kann.

4. Selbstfahrende landwirtschaftliche Arbeitsmaschine (1) nach einem beliebigen der Ansprüche 1 bis 3, **dadurch gekennzeichnet, dass**
die Zuordnung oder Einstellung als Teil einer Einstellfahrt stattfindet.

5. Selbstfahrende landwirtschaftliche Arbeitsmaschine (1) nach einem beliebigen der Ansprüche 1 bis 4, **dadurch gekennzeichnet, dass**
die Zuordnung oder Einstellung mittels der Signal verarbeitenden Einheit (8) simuliert werden kann.

6. Selbstfahrende landwirtschaftliche Arbeitsmaschine (1) nach Anspruch 5, **dadurch gekennzeichnet, dass** die Simulation graphisch auf der Anzeigeeinheit (30) dargestellt werden kann.

7. Selbstfahrende landwirtschaftliche Arbeitsmaschine (1) nach einem beliebigen der vorangehenden Ansprüche, **dadurch gekennzeichnet, dass**
die Signal verarbeitende Einheit (8) sich verändernde Betriebsbedingungen der landwirtschaftlichen Arbeitsmaschine (1) auf der Grundlage des wenigstens einen Sensorsignals und/oder wenigstens einer Betätigung eines Steuerelements und/oder des Ablaufs einer definierbaren Zeit und/oder der Bewältigung einer definierbaren Strecke erfasst.

8. Selbstfahrende landwirtschaftliche Arbeitsmaschine (1) nach einem beliebigen der vorangehenden Ansprüche, **dadurch gekennzeichnet, dass**
die Betriebsbedingungen wenigstens umfassen
- Straßenfahrt und/oder
- Feldfahrt und/oder
- die Position der Arbeitsmaschine (1) und/oder
- den Verlauf einer Bearbeitungsfläche der Arbeitsmaschine (1) und/oder
- die Arbeitsbedingungen von wenigstens einem Arbeitsmechanismus, welcher aktiv mit der Arbeitsmaschine (1) verbunden ist, und/oder
- die arbeitslose Betätigung von wenigstens einem Arbeitsmechanismus, welcher aktiv mit der Arbeitsmaschine (1) verbunden ist, und/oder
- die Überwindung eines Hindernisses während der Feldfahrt oder
- Wenden an einem Ende des Feldes und/oder
- Ausstieg aus einer Fahrspur auf dem Feld (21) und/oder
- Eintritt in eine Fahrspur auf dem Feld (21) und/oder
- einen Vorgang zum Übergeben des Ernteguts von der Arbeitsmaschine (1) auf eine zweite Arbeitsmaschine und/oder
- einen Vorgang zum Übergeben von Erntegut von einer zweiten Arbeitsmaschine auf die Arbeitsmaschine (1) auf eine und/oder
- den Einbau von Zubehör an der Arbeitsmaschine (1) und/oder
- die Bewegung von Zubehör auf der Arbeitsmaschine (1) und/oder
- die Betätigung eines hydraulischen Steuerventils und/oder
- die Betätigung eines Stellglieds und/oder
- die Fahrtrichtung der Arbeitsmaschine (1) und/oder
- die umgebende Helligkeit oder Sicht und/oder
- die Wartung und/oder Füllung der Arbeitsmaschine (1) mit Treibstoff.

9. Selbstfahrende landwirtschaftliche Arbeitsmaschine (1) nach einem beliebigen der vorangehenden Ansprüche, **dadurch gekennzeichnet, dass**
die Steuerung und/oder Einstellung des wenigstens einen aktiven und/oder passiven optischen Elements (6, 7) in ein Vorgewendemanagement systemintegriert ist.

10. Selbstfahrende landwirtschaftliche Arbeitsmaschine (1) nach einem beliebigen der vorangehenden Ansprüche, **dadurch gekennzeichnet, dass**
das wenigstens eine aktive optische Element (6) ein Fahrzeugfrontscheinwerfer (A1, A2, A3, A4, A5, A6, A7, A8, A9, A10, A11, A12) oder ein Fahrzeugscheinwerfer ist.

11. Selbstfahrende landwirtschaftliche Arbeitsmaschine (1) nach einem beliebigen der vorangehenden Ansprüche, **dadurch gekennzeichnet, dass** das wenigstens eine passive optische Element (7) ein Fahrzeugspiegel (Sp1, Sp2) oder eine Weitwinkellinse ist.

## Revendications

1. Machine de travail agricole auto-propulsée (1) ayant au moins un élément optique actif et/ou passif (6, 7), dans laquelle ledit au moins un élément optique actif et/ou passif (6, 7) peut être automatiquement commandé et/ou ajusté au moyen d'au moins une unité de traitement de signaux (8) disposée sur la machine de travail (1) en fonction de conditions de travail actuelles de la machine de travail agricole (1), **caractérisée en ce que** ledit au moins un élément optique actif et/ou passif (6, 7) peut être attribué à des conditions de fonctionnement individuelles de la machine de travail (1) au moyen d'au moins une unité d'entrée et **en ce que** l'attribution peut être stockée dans l'unité de traitement de signaux (8) de manière à pouvoir être rappelée.

2. Machine de travail agricole auto-propulsée (1) selon la revendication 1, **caractérisée en ce que** la commande et/ou l'ajustement dudit au moins un élément optique actif et/ou passif (6, 7) comprend un ajustement et/ou une activation et/ou une désactivation et/ou une influence des paramètres de travail dudit au moins un élément optique actif et/ou passif (6, 7).

3. Machine de travail agricole auto-propulsée (1) selon la revendication 1 ou 2, **caractérisée en ce que** la commande et/ou l'ajustement dudit au moins un élément optique actif et/ou passif (6, 7) attribué aux conditions de fonctionnement respectives est ou sont réglable(s) au moyen d'au moins une unité d'entrée et **en ce que** le réglage peut être stocké dans l'unité de traitement de signaux (8) de manière à pouvoir être rappelé.

4. Machine de travail agricole auto-propulsée (1) selon l'une quelconque des revendications 1 à 3, **caractérisée en ce que** l'attribution ou l'ajustement a lieu dans le cadre d'un entraînement par apprentissage.

5. Machine de travail agricole auto-propulsée (1) selon l'une quelconque des revendications 1 à 4, **caractérisée en ce que** l'attribution et/ou l'ajustement peut ou peuvent être simulé(e)(s) au moyen de l'unité de traitement de signaux (8).

6. Machine de travail agricole auto-propulsée (1) selon la revendication 5, **caractérisée en ce que** la simulation peut être représentée sous forme de graphique sur une unité d'affichage (30).

7. Machine de travail agricole auto-propulsée (1) selon l'une quelconque des revendications précédentes, **caractérisée en ce que** l'unité de traitement de signaux (8) détecte un changement de conditions de fonctionnement de la machine de travail agricole (1) sur la base d'au moins un signal de capteur et/ou d'au moins un actionnement d'un élément de commande et/ou de l'écoulement d'un temps pouvant être défini et/ou de l'achèvement du parcours d'une distance pouvant être définie.

8. Machine de travail agricole auto-propulsée (1) selon l'une quelconque des revendications précédentes, **caractérisée en ce que** les conditions de fonctionnement comprennent au moins :
- un déplacement sur une route et/ou
- un déplacement dans un champ et/ou
- la position de la machine de travail (1) et/ou
- la trajectoire d'une zone de traitement de la machine de travail (1) et/ou
- la mise en marche d'au moins un mécanisme de travail relié de manière active à la machine de travail (1) et/ou
- la mise à l'arrêt d'au moins un mécanisme de travail relié de manière active à la machine de travail (1) et/ou
- l'évitement d'un obstacle au cours d'un déplacement dans un champ ou
- un virage à l'extrémité du champ et/ou
- la sortie d'une voie de circulation sur le champ (21) et/ou
- l'entrée dans une voie de circulation sur le champ (21) et/ou
- un processus pour transférer la récolte de la machine de travail (1) vers une seconde machine de travail et/ou
- un processus pour transférer une récolte depuis une seconde machine de travail vers la machine de travail (1) et/ou
- l'installation d'équipements sur la machine de travail (1) et/ou
- le mouvement d'équipements sur la the machine de travail (1) et/ou
- l'actionnement d'une vanne de commande hydraulique et/ou
- l'actionnement d'un actionneur et/ou
- le sens de déplacement de la machine de travail (1) et/ou
- la luminosité ou la visibilité ambiante et/ou
- la maintenance et/ou le remplissage de la machine de travail (1) avec du carburant.

9. Machine de travail agricole auto-propulsée (1) selon l'une quelconque des revendications précédentes, **caractérisée en ce que** la commande et/ou l'ajustement dudit au moins un élément optique actif et/ou passif (6, 7) est ou sont intégré(e)(s) dans un système de gestion de tournière.

10. Machine de travail agricole auto-propulsée (1) selon l'une quelconque des revendications précédentes, **caractérisée en ce que** ledit au moins un élément optique actif (6) est un phare de véhicule (6) (A1, A2, A3, A4, A5, A6, A7, A8, A9, A10, A11, A12) ou un feu de véhicule.

11. Machine de travail agricole auto-propulsée (1) selon l'une quelconque des revendications précédentes, **caractérisée en ce que** ledit au moins un élément optique passif (7) est un rétroviseur de véhicule (Sp1, Sp2) ou un objectif grand angle.
